(19) Europäisches Patentamt
European Patent Office
Office européen des brevets

(11) **EP 1 659 018 B1**

(12) **FASCICULE DE BREVET EUROPEEN**

(45) Date de publication et mention
de la délivrance du brevet:
**15.04.2009 Bulletin 2009/16**

(51) Int Cl.:
*B60K 31/00* *(2006.01)*     *B61F 5/00* *(2006.01)*

(21) Numéro de dépôt: **05292408.1**

(22) Date de dépôt: **14.11.2005**

(54) **Dispositif et procédé de contrôle de la vitesse d'un véhicule ferroviaire et système comprenant de tels dispositifs**

Vorrichtung und Verfahren zur Regelung der Geschwindigkeit eines Schienenfahrzeugs und solche Vorrichtung enthaltende Systeme

Device and method for controlling the speed of a railway vehicle and system comprising such devices

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**HR**

(30) Priorité: **17.11.2004 FR 0412203**

(43) Date de publication de la demande:
**24.05.2006 Bulletin 2006/21**

(73) Titulaire: **ALSTOM Transport SA**
**92300 Levallois-Perret (FR)**

(72) Inventeur: **De Graaf, Johan**
**17000 La Rochelle (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
**WO-A-99/14093**     **GB-A- 2 371 121**
**US-A1- 2004 030 483**     **US-B1- 6 456 923**

**Description**

La présente invention concerne un dispositif et un procédé de contrôle de la vitesse d'un véhicule ferroviaire équipé d'au moins une paire de roues mécaniquement indépendantes agencées en vis-à-vis de part et d'autre du véhicule et un système de contrôle de la vitesse d'un véhicule équipé d'une pluralité de tels dispositifs.

La vitesse est un paramètre de roulage prépondérant dans le risque de déraillement d'un train engagé dans une courbe.

Des systèmes de limitation automatique de la vitesse d'un véhicule au sens large sont décrits dans les demandes de brevet GB-A-2 371 127, WO99/14093A, US2004/030483A1 et le brevet US-B1-6456923.

Il est connu des systèmes de limitation automatique de la vitesse d'un véhicule du type susmentionné, basés sur une reconnaissance préalable des courbes du trajet de celui-ci auxquelles il est associé à chacune une vitesse limite.

Cette reconnaissance préalable est mémorisée dans le système qui comprend un récepteur GPS pour le positionnement du véhicule vis-à-vis des courbes mémorisées.

A l'approche de l'une d'entre elle, le système limite alors la vitesse du véhicule à la vitesse associée à cette courbe.

D'une manière générale, de tels systèmes ne présentent pas une précision importante dans le contrôle de la limitation de vitesse, et particulièrement dans les parties de trajet comprenant de nombreuses courbes, comme les portions ferrées urbaines par exemple.

Ainsi, de tels systèmes tendent à limiter la vitesse du véhicule, y compris dans les lignes droites de telles portions. Ceci résulte alors en un temps de trajet rallongé et en un trafic plus encombré.

Le but de la présente invention est de résoudre le problème susmentionné en proposant un dispositif et un procédé de limitation de la vitesse du véhicule qui ne conduise pas à un allongement inutile du temps de trajet.

A cet effet, la présente invention a pour objet un système de contrôle de la vitesse d'un véhicule ferroviaire selon la revendication 1.

Suivant des modes particuliers de réalisation, le dispositif comporte une ou plusieurs des caractéristiques suivantes :

- les moyens de détermination du rayon de courbure comprennent :

  - des moyens de détermination de la vitesse longitudinale de chaque roue de la paire de roues en fonction de la vitesse de rotation acquise de cette roue ; et
  - des moyens de calcul du rayon de courbure de la voie ferrée en fonction desdites vitesses longitudinales ;

- les moyens de calcul du rayon de courbure sont propres à déterminer celui-ci selon la relation :

$$R = \left| \frac{E}{2} \times \frac{Vg + Vd}{Vg - Vd} \right|$$

où R est le rayon de courbure, E est l'écartement entre les roues de la paire de roues, et Vg et Vd sont les vitesses longitudinales des roues de la paire de roues ;

- les moyens de détermination de la vitesse limite sont propres à déterminer une vitesse limitée associée à la paire de roues selon la relation :

$$V_L = \alpha \times \sqrt{\beta \times R}$$

où $V_L$ est la vitesse limite, R le rayon de courbure de la voie ferrée au niveau de la paire de roues, et $\alpha$ et $\beta$ sont des paramètres prédéterminés ;

- le véhicule comprend un système de motorisation à commande par couple pour l'entraînement des roues du véhicule, et les moyens de limitation comprennent des moyens de régulation adaptés pour déterminer une consigne de couple pour le système de motorisation en fonction de la vitesse du véhicule et de la vitesse limite déterminée à partir d'une loi de régulation prédéterminée ;

- il comprend en outre des moyens de sélection, pour la commande du système de motorisation, du minimum parmi la consigne de couple déterminée par les moyens de régulation et une consigne de couple délivrée par le conducteur du véhicule ;

- il comprend en outre des moyens d'activation/désactivation de la limitation de vitesse mise en oeuvre par les moyens de limitation en fonction de conditions prédéterminées relatives au glissement des roues de la paire de roues ;

- les moyens d'activation/désactivation comprennent des moyens de détermination d'une valeur représentative dudit glissement et des moyens de comparaison de celle-ci à une valeur seuil prédéterminée, et la limitation de vitesse est désactivée si la valeur représentative dudit glissement est supérieure à la valeur seuil ; et

- les moyens d'activation/désactivation activent la limitation de vitesse si au moins la valeur représentative dudit glissement est inférieure à la valeur seuil pendant une durée prédéterminée.

Selon un mode particulier de réalisation, le système de contrôle de la vitesse d'un véhicule ferroviaire est équipé d'une pluralité de paires de roues mécaniquement indépendantes agencées en vis-à-vis de part et d'autre de celui-ci, et est caractérisé en ce qu'il comprend :

- une pluralité de dispositifs du type susmentionné associés respectivement à des paires sélectionnées de la pluralités de paires de roues ; et
- des moyens de sélection, parmi les signaux de commande déterminés par lesdits dispositifs, du signal correspondant à la vitesse limite minimale.

Selon un mode particulier de réalisation, le système est équipé d'une pluralité de paires de roues mécaniquement indépendantes agencées en vis-à-vis de part et d'autre de celui-ci, et est caractérisé en ce qu'il comprend :

- au moins un dispositif du type susmentionné et associé à une paire sélectionnée de roues de ladite pluralité de paires de roues ;
- des moyens d'acquisition de la vitesse de rotation de chaque roue d'au moins une autre paire de roues sélectionnée de ladite pluralité de paires de roues ;
- des moyens de détermination du rayon de courbure de la voie ferrée au niveau de la ou chaque autre paire de roues sélectionnée de ladite pluralité de paires de roues ; et
- des moyens de sélection du minimum des rayons de courbure déterminés par ledit au moins un dispositif et les moyens de détermination du rayon de courbure associé à l'autre paire de roues, et les moyens de détermination de la vitesse limite dudit au moins un dispositif propres à déterminer cette vitesse limite en fonction du minimum des rayons de courbure sélectionné ;
- les paires sélectionnées comprennent les paires de la pluralité de paires de roues les plus extrêmes du véhicule.

Un autre objet de l'invention est un procédé de contrôle de la vitesse d'un véhicule ferroviaire selon la revendication 12.

La présente invention sera mieux comprise à la lecture de la description qui va suivre, donnée uniquement à titre d'exemple, et faite en relation avec les dessins annexés, dans lesquels des numéros identiques se réfèrent à des éléments identiques ou analogues et dans lesquels :

- la figure 1 est une vue schématique d'un train équipé d'un système de contrôle de la vitesse selon l'invention ;
- la figure 2 est une vue schématique d'un dispositif de contrôle de la vitesse du train entrant dans la constitution du système de la figure 1;
- la figure 3 est une vue schématique d'un autre mode de réalisation du dispositif de contrôle entrant dans la constitution du système de la figure 1 ;
- la figure 4 est un organigramme du fonctionnement du système de la figure 1 ; et

- la figure 5 est une vue schématique d'un autre mode de réalisation du système de la figure 1.

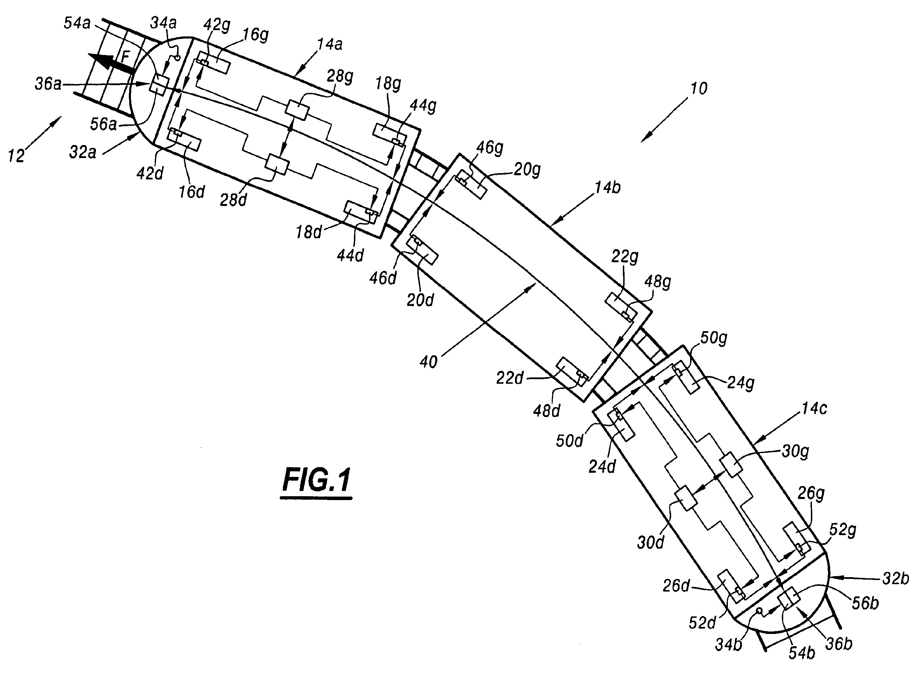

Dans ce qui suit, les termes "gauche", "droite", "avant" et "arrière" sont définis par rapport à l'orientation du train de la figure 1.

Sur la figure 1, il est représenté de manière schématique un train 10 engagé dans une courbe d'une voie ferrée 12, et se déplaçant par exemple selon la direction indiquée par la flèche F.

Le train 10 est constitué d'une pluralité de bogies 14a, 14b, 14c comprenant chacun une paire de roues avant indépendantes 16g-16d, 20g-20d, 24g-24d et une paire de roues arrière indépendantes 18g-18d, 22g-22d, 26g-26d.

Dans l'exemple illustré ici, les roues de chacune des paires sont disposées l'une en face de l'autre et de part et d'autre du train 12 et sont mécaniquement indépendantes, c'est-à-dire non entraînées par un même essieu.

Par exemple, le train comprend des bogies automoteurs 14a, 14c équipés chacun d'un premier moteur 28g, 30g pour l'entraînement de ses roues gauches 16g, 18g, 24g, 26g et un second moteur 28d, 30d pour l'entraînement de ses roues droites 16d, 18d, 24d, 26d.

Le train comprend également des bogies passifs 14b, c'est-à-dire sans système de motorisation, dont les roues gauche 20g, 22d et droite 20d, 22d sont respectivement fixées à des arbres indépendants.

Les moteurs 28g, 28d, 30g et 30d sont pilotés depuis un poste de pilotage 32a, 32b par un conducteur actionnant un levier 34a, 34b de demande de couple, comme cela est connu en soi.

Le poste de pilotage 32a, 32b comprend une console 36a, 36b de contrôle de la vitesse du train raccordée à chaque moteur des bogies automoteurs, au moyen d'un bus CAN, FIP, MVB ou Ethernet 40 par exemple.

Plusieurs paires de roues droite et gauche mécaniquement indépendantes sont sélectionnées pour que chacune de leurs roues soit équipée d'un capteur 42g, 42d, 44g, 44d, 46g, 46d, 48g, 48d, 50g, 50d, 52g, 52d de vitesse de rotation, par exemple un capteur à effet Hall associé à une roue dentée fixée sur l'essieu de la roue. En variante, pour une roue entraînée par un moteur, le capteur de vitesse de rotation est un capteur du régime du moteur connecté à un module de multiplication du régime mesuré par le rapport de réduction du moteur.

De manière avantageuse, au moins les paires de roues mécaniquement indépendantes les plus extrêmes sont sélectionnées pour être équipées de capteurs de vitesse, dans cet exemple la paire de roues 16g-16d et la paire de roues 26g-26d à des fins qui seront expliquées plus en détail par la suite.

En variante, une seule paire de roues mécaniquement indépendantes est sélectionnée pour le contrôle de la vitesse du train.

Les capteurs de vitesse de rotation sont raccordés à la console de contrôle 36a, 36b à travers le bus 40 pour lui délivrer leurs mesures.

La console de contrôle 36a, 36b comprend, associé à chacune des paires de roues équipées de capteurs, un dispositif 54a, 54b de contrôle de la vitesse du train. Ce dispositif 54a, 54b de contrôle détermine une consigne de couple C pour les moteurs en fonction des vitesses de rotation acquises des roues et délivre celle-ci à des moyens 56a, 56b de sélection du minimum Cmin des consignes déterminées par chaque dispositif 54a, 54b de contrôle associé à une paire de roues respective, comme cela sera expliqué plus en détail par la suite.

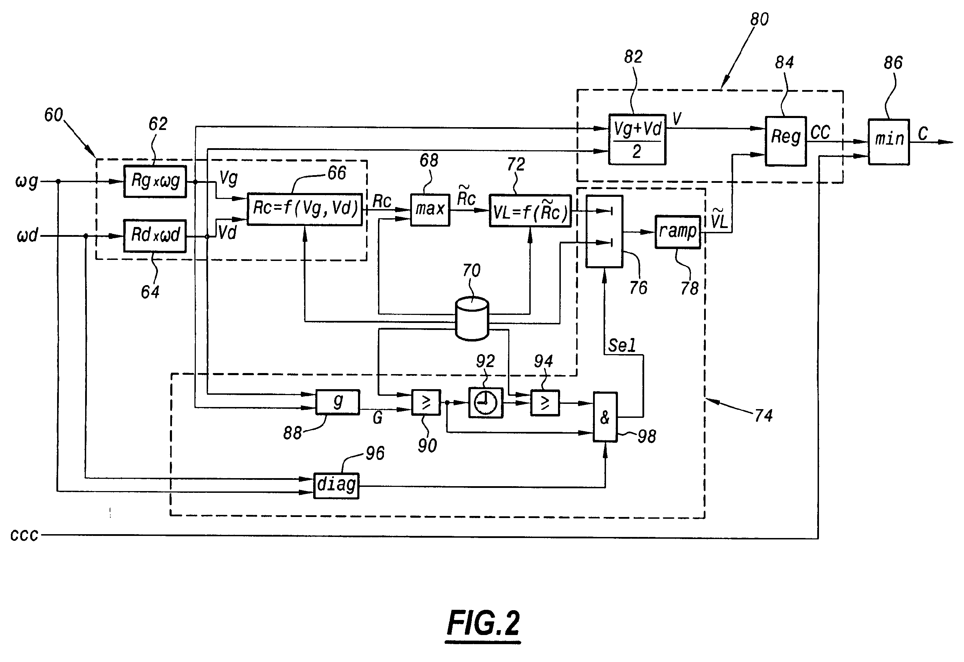

Un tel dispositif de contrôle est illustré sur la figure 2.

Le dispositif de contrôle comprend une unité 60 de détermination du rayon de courbure Rc au niveau de la paire de roues à laquelle il est associé. L'unité 60 comprend des moyens 62, 64 de détermination de la vitesse longitudinale Vg, Vd de chacune des roues droite et gauche en fonction de leurs vitesses de rotation acquises $\omega_g$, $\omega_d$ respectives, par exemple selon la relation :

$$Vi = Ri \times \omega i \quad (1)$$

où Vi est la vitesse longitudinale d'une des roues gauche ou droite, Ri le rayon de celle-ci, et $\omega i$ la vitesse de rotation acquise de celle-ci.

En variante, d'autres modèles de calcul de la vitesse longitudinale sont utilisés, comme des modèles d'estimation du glissement de la roue, des modèles dynamiques du train,...

Les vitesses longitudinales Vg, Vd des roues gauche et droite ainsi déterminées sont délivrées à des moyens 66 de calcul du rayon de courbure Rc au niveau de celles-ci selon la relation :

$$Rc = \left| \frac{E}{2} \times \frac{Vg + Vd}{Vg - Vd} \right| \quad (2)$$

où E est l'écartement entre ces deux roues.

Lorsque les roues droite et gauche de la paire de roues sont engagées sur une portion sensiblement peu courbée de la voie ferrée, leurs vitesses longitudinales Vg et Vd sont sensiblement égales. Ainsi, l'inversion du terme Vg-Vd de la relation (2) peut résulter en des problèmes numériques, de sorte que le rayon de courbure Rc calculé peut être non représentatif du rayon de courbure réel de la voie ferrée.

De manière avantageuse, le dispositif de contrôle comprend des moyens 68 de vérification et de correction des résultats numériques délivrés par les moyens 66 de calcul.

Par exemple, les moyens 68 sont propres à sélectionner le maximum entre le rayon de courbure Rc calculé et une valeur prédéterminée mémorisée dans des moyens de stockage de données 70.

Cette valeur, par exemple égale à 25 m, est déterminée par les caractéristiques du réseau ferré.

Le rayon de courbure résultant $\tilde{R}c$ de cette sélection est ensuite délivré à des moyens 72 de détermination d'une vitesse limite $V_L$ pour le train.

Les moyens 72 comprennent par exemple une cartographie prédéterminée de valeurs de vitesse en fonction de valeurs de rayon de courbure déterminées expérimentalement.

En variante, les moyens 72 sont adaptés pour déterminer la vitesse limite $V_L$ selon la relation :

$$V_L = \alpha \times \sqrt{\beta \times \tilde{R}c}$$

où $\alpha$ et $\beta$ sont des paramètres prédéterminés expérimentalement et mémorisés dans les moyens 70 de stockage de données. Par exemple, $\alpha$ et $\beta$ sont égaux à 3,6 et 0,65 m/s² respectivement.

La vitesse limite $V_L$ est alors délivrée à une unité 74 d'activation/désactivation de la limitation de la vitesse du train.

L'unité 74 comprend des moyens 76 de sélection parmi cette vitesse limite $V_L$ et une valeur prédéterminée mémorisée dans les moyens 70 de stockage de données. Cette sélection est réalisée en fonction d'un signal de sélection Sel, comme cela sera expliqué plus en détail par la suite.

Les moyens 76 délivrent la valeur sélectionnée à des moyens 78 de filtrage de la sortie des moyens 76 de sélection. Ces moyens 78 comprennent par exemple un filtre mettant en oeuvre une rampe temporelle pour passer de manière continue d'une valeur précédemment sélectionnée à une valeur nouvellement sélectionnée par les moyens 76. Ceci permet de compenser les effets d'une commutation discontinue entre deux valeurs de la sortie des moyens 76 de sélection.

La vitesse limite $\tilde{V}_L$ en sortie des moyens 78 de filtrage est délivrée à une unité 80 de limitation de la vitesse du train.

L'unité de limitation 80 comprend des moyens 82 de détermination de la vitesse du train V, par exemple adaptés pour calculer la moyenne des vitesses longitudinales Vg et Vd déterminées par les moyens 62, 64 de détermination de celles-ci.

L'unité 80 comprend également des moyens 84 de régulation recevant la vitesse limite $\tilde{V}_L$ des moyens 78 d'atténuation en tant que consigne et la vitesse V du train en tant que mesure.

En variante, les moyens 84 de régulation reçoivent la vitesse V du train de moyens d'acquisition ou de détermination classiquement présents dans le train, de sorte que l'unité 80 ne comprend pas les moyens 82 de détermination de cette vitesse.

Les moyens 84 sont propres à calculer en fonction de la vitesse V du train et de la vitesse limite $\tilde{V}_L$ une consigne de couple de régulation CC pour les moteurs du train à partir d'une loi de régulation prédéterminée.

Cette loi de régulation est déterminée pour que l'application de la consigne de régulation CC en tant que signal de commande des moteurs a pour effet que la vitesse V du train est régulée sur la vitesse limite $\tilde{V}_L$. Cette loi de régulation est également avantageusement déterminée pour la vitesse V n'excède pas la vitesse limite $\tilde{V}_L$.

La consigne de couple CC est délivrée à des moyens 86 de sélection du minimum parmi celle-ci et une consigne CCC de couple délivrée par le conducteur du train au moyen du levier de demande de couple du poste de pilotage.

Lors du glissement d'une roue, la détermination de la vitesse longitudinale de celle-ci peut être imprécise, voire erronée. L'ensemble des calculs basés sur une telle vitesse est alors également non satisfaisant.

L'unité 74 d'activation/désactivation est adaptée pour activer ou désactiver la limitation de vitesse du véhicule vis-à-vis de la vitesse $V_L$ déterminée par les moyens 72 de détermination en fonction de conditions prédéterminées portant sur le glissement des roues droite et gauche de la paire de roues.

L'unité 74 comprend à cet effet des moyens 88 de détermination d'une valeur G représentative du glissement des roues droite et gauche. Les moyens 88 reçoivent les vitesses longitudinales Vg et Vd déterminées, et sont propres à calculer la valeur G selon la relation :

$$G = |Vd - Vg|$$

Les moyens 88 délivrent la valeur G calculée à des moyens 90 de comparaison de celle-ci à une valeur seuil prédéterminée par exemple égale à 1,8, mémorisée dans les moyens 70 de stockage.

Le résultat de cette comparaison est délivré à un compteur de temps 92, qui est déclenché dès que la valeur G est inférieure à sa valeur de seuil. Le compteur 92 délivre sa valeur de compteur à des moyens 94 de comparaison de celle-ci à une valeur seuil prédéterminée, par exemple 2s, mémorisée dans les moyens 70 de stockage.

Cette valeur seuil est également déterminée expérimentalement et correspond à la durée au bout de laquelle il est sensiblement certain qu'aucune des roues ne glisse.

L'unité 74 comprend également des moyens 96 de diagnostic de l'état de fonctionnement des capteurs de vitesse de rotation associés aux roues, par exemple en fonction des mesures $\omega_g$, $\omega_d$ délivrées par ceux-ci, comme cela est connu en soi.

Les résultats de la comparaison des moyens 90 et 94 et le résultat du diagnostic de l'état de fonctionnement des capteurs de vitesse de rotation sont délivrés à des moyens 98 réalisant la fonction ET et délivrant le signal de sélection Sel aux moyens 76 de sélection.

Ainsi, si les roues ne présentent pas de glissement et cela pendant au moins une durée prédéterminée et que les capteurs fonctionnent de manière satisfaisante, les moyens 76 sélectionnent la vitesse limite $V_L$ déterminée par les moyens 72.

Sinon, la valeur prédéterminée reçue par les moyens 76 de sélection depuis les moyens 70 de stockage est sélectionnée.

Cette valeur, qui est la vitesse maximale autorisée sur le réseau, par exemple 70 km/h, est suffisamment élevée pour que la consigne de couple CC calculée par les moyens 84 soit supérieure à la consigne de couple CCC délivrée par le conducteur. Ainsi, la consigne CCC est sélectionnée par les moyens 80 et la limitation mise en oeuvre par l'unité 80 étant donc désactivée.

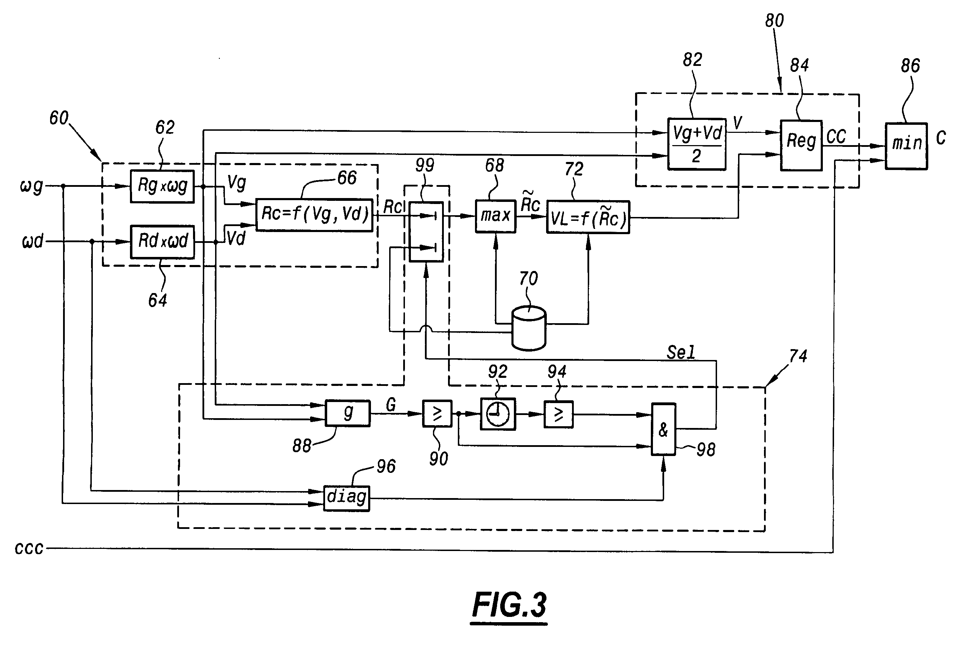

On a illustré sur la figure 3 un autre mode de réalisation du dispositif de contrôle conforme à l'invention. Ce mode de réalisation diffère de celui décrit précédemment en ce que l'activation/désactivation de la limitation de vitesse en fonction du glissement des roues de la paire de roues est réalisée en sortie de l'unité 60 de détermination du rayon de courbure Rc.

Comme cela est illustré sur la figure 3, l'unité 74 d'activation/désactivation comprend des moyens 99 de sélection qui reçoivent en entrée le rayon de courbure Rc calculé par l'unité 60 et une valeur prédéterminée de rayon de courbure mémorisée dans les moyens 70 de stockage de données.

Les moyens 99 sont propres à sélectionner, et à délivrer aux moyens 68, l'une ou l'autre des valeurs reçues en entrée en fonction d'un signal Sel déterminé d'une manière analogue par les mêmes éléments de l'unité 74 décrits précédemment en relation avec la figure 2.

Plus particulièrement, si les roues ne présentent pas de glissement et cela au moins pendant la durée prédéterminée mémorisée dans les moyens 70 de stockage et que les capteurs de vitesse de rotations associés aux roues de la paire de roues fonctionnent de manière satisfaisante, les moyens 99 sélectionnent le rayon de courbure Rc déterminé par les moyens 60.

Sinon, les moyens 99 sélectionnent la valeur d'entrée mémorisée dans les moyens 70 de stockage. Cette valeur est déterminée comme étant suffisamment grande, par exemple égale à 1000 km, pour que son utilisation en tant que rayon de courbure dans les éléments de calcul suivants désactivent la limitation de vitesse du train.

Si le train est équipé d'un seul dispositif conforme à l'invention associé à une paire de roues droite et gauche du train, la consigne de couple C est alors délivrée aux moteurs pour la commande de ceux-ci.

Si le train est équipé d'une pluralité de dispositifs conformes à l'invention, chacun associé à une paire sélectionnée de roues mécaniquement indépendantes et agencées en vis-à-vis, l'ensemble des consignes de couple C déterminées par ces dispositifs est délivré à des moyens de sélection du minimum parmi ces consignes de couple C.

En variante, les moyens 86 de sélection du minimum entre la consigne de couple de régulation CC et la consigne CCC délivrée par le conducteur d'un dispositif quelconque de la pluralité de dispositifs sont propres à recevoir les consignes de couple de régulation CCC des autres dispositifs et à sélectionner le minimum parmi celles-ci et la consigne de couple CCC délivrée par le conducteur.

Le minimum sélectionné des consignes de couple est alors délivré aux moteurs pour la commande de ceux-ci. Ce minimum correspond au minimum des vitesses limites déterminées par la pluralité de dispositifs de sorte que la vitesse du véhicule n'excède pas ce minimum des vitesses limites.

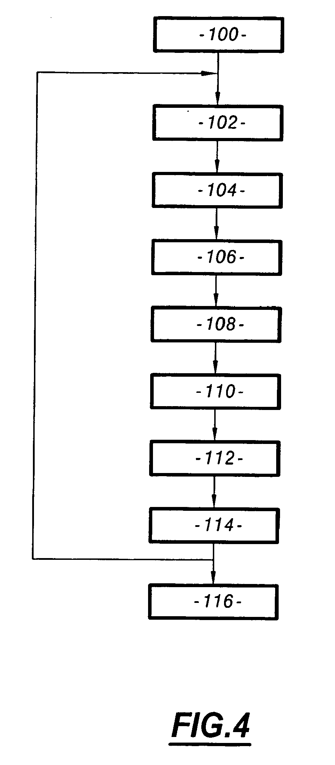

Le fonctionnement du système de contrôle comprenant des dispositifs selon le mode de réalisation de la figure 2 décrit ci-dessus est ci-après expliqué en relation avec l'organigramme de la figure 4.

Dans une étape 100 d'initialisation, les différents éléments du système sont activés.

Dans une étape 102 suivante, une acquisition des vitesses de rotation $\omega_g$, $\omega_d$ des roues droite et gauche de chaque paire de roues sélectionnée est réalisée.

En 104, les vitesses longitudinales $V_d$, $V_g$ de la paire de roue sont alors déterminées, ainsi que le rayon de courbure Rc, la valeur G représentative du glissement des roues de la paire de roues, le diagnostic de l'état de fonctionnement des capteurs de vitesse de rotation associés à ces roues et la vitesse V du train.

Dans une étape 106 suivante, le maximum $\tilde{R}c$ entre le rayon de courbure Rc déterminé et la valeur seuil associée est sélectionné, et la vitesse limite $V_L$ déterminée en fonction de ce maximum.

Les conditions sur le glissement de roues sont alors testées en 108, et si celles-ci sont satisfaites, la vitesse limite $V_L$ est sélectionnée en 110. Sinon la valeur prédéterminée de vitesse limite est sélectionnée en 110.

L'étape 112 suivante du fonctionnement est alors le calcul de la consigne de couple CC en fonction de la vitesse V du train et de la valeur sélectionnée $\tilde{V}_L$ pour la vitesse limite.

Cette étape 112 est alors suivie en 114 de la sélection du minimum entre la consigne de couple CC et de la consigne CCC délivrée par le conducteur du train.

L'étape 114 reboucle alors sur l'étape 102 d'acquisition pour l'exécution d'un nouveau cycle de calcul.

La consigne de couple sélectionnée en 114 est alors délivrée, en 116, aux moyens de sélection du minimum des consignes de couple déterminé pour l'ensemble des paires de roues sélectionnées, et la consigne de couple sélectionnée délivrée aux moyens de commande des moteurs du train.

Si le système comprend une pluralité de dispositifs selon le second mode de réalisation décrit en relation avec la figure 3, l'étape 106 précédente consiste tout d'abord à tester les conditions sur le glissement des roues et à sélectionner le rayon de courbure déterminé par les moyens 60 si elles sont satisfaites ou à sélectionner la valeur de rayon de courbure mémorisée dans les moyens 70 de stockage sinon. Le maximum $\tilde{R}c$ entre la valeur sélectionnée par les moyens 99 et la valeur mémorisée dans les moyens 70 associée aux moyens 68 est alors sélectionnée et la vitesse limite $V_L$ est déterminée en fonction de ce maximum.

L'étape 106 boucle ensuite directement sur l'étape 112 précédemment décrite.

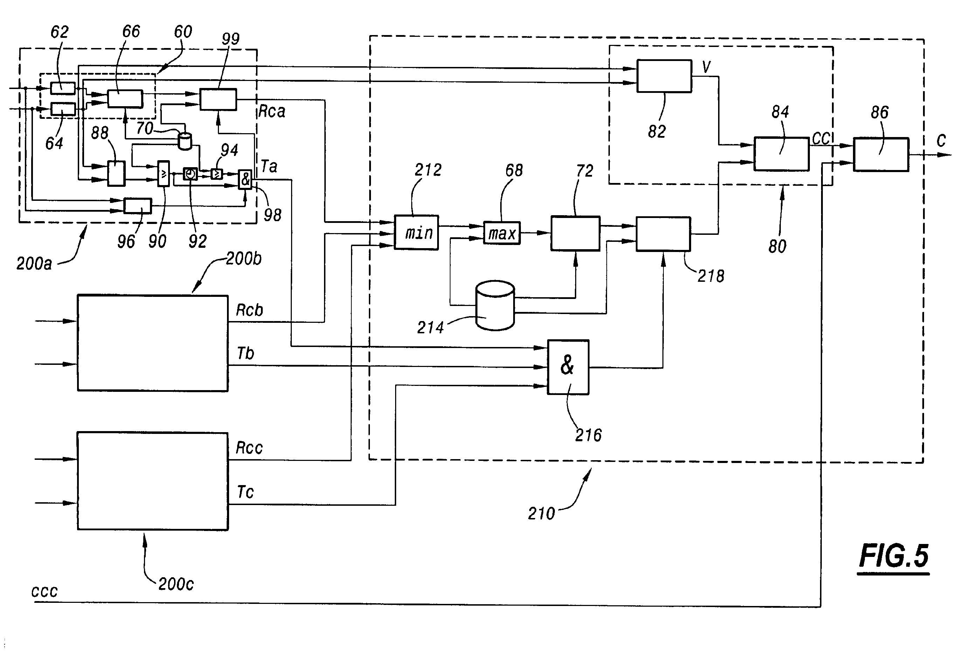

Un autre mode de réalisation du système de régulation de la vitesse du train en fonction des vitesses des roues d'une pluralité de paires sélectionnées de roues droites et gauches mécaniquement indépendantes est illustré sur la figure 5.

Le système de la figure 5 comprend des éléments identiques à ceux décrits en relation avec la figure 3. Les éléments identiques à ceux de la figure 3 sont référencés par les mêmes numéros et ne sont pas décrits ici pour des raisons de concision.

Ce système comprend au moins un dispositif du type décrit précédemment en relation avec la figure 3 associé à une paire de roues sélectionnée de la pluralité de paires de roues, la partie de ce dispositif propre à calculer la vitesse limite pour le train et la consigne de couple de régulation CC étant commune à l'ensemble de paires sélectionnées de roues, comme cela est expliqué plus en détail ci-dessous.

Chaque paire de roues sélectionnée, par exemple au nombre de 3, est associée à un dispositif 200a, 200b, 200c propre à déterminer le rayon de courbure Rca, Rcb, Rcc de la voie ferrée au niveau de la paire de roues ainsi qu'un signal Ta, Tb, Tc, représentatif de l'occurrence d'un glissement de la paire de roues.

Ce dispositif 200a, 200b, 200c comprend à cet effet une unité 60 de détermination du rayon de courbure au niveau de la paire de roues, des moyens 70 de stockage de données, et une unité 74 d'activation / désactivation décrite en relation avec la figure 3, à savoir des moyens 88 de détermination d'une valeur représentative du glissement des roues de la paire de roues, des moyens 90 de comparaison, un compteur de temps 92, des moyens 94 de comparaison, des moyens 96 de diagnostic, des moyens 98 réalisant la fonction ET et délivrant un signal de sélection Ta, Tb, Tc et des moyens 99 de sélection entre le rayon de courbure Rc déterminé par l'unité 60 et une valeur prédéterminée de rayon de courbure en fonction du signal de sélection délivré par les moyens 98, comme cela a été décrit précédemment.

Ces moyens 88, 90, 92, 94, 96, 98 et 99 sont agencés d'une manière identique à celle décrite en relation avec la figure 3.

Le système comprend également un dispositif 210 de commande de la vitesse du train.

Ce dispositif 210 comprend une unité de limitation 80 identique à celle des figures 2 et 3. Cette unité comporte des moyens 82 de détermination de la vitesse du train en fonction des vitesses longitudinales des roues droite et gauche déterminées par l'unité 60 de détermination du rayon de courbure de l'un quelconque des dispositifs 200a, 200b, 200c associé à une paire de roues.

Le dispositif 210 comprend également des moyens 212 de sélection recevant les rayons de courbure Rca, Rcb, Rcc sélectionnés par les moyens 99 de sélection des dispositifs 200a, 200b, 200c et propres à sélectionner le minimum de ceux-ci.

Ces moyens 212 de sélection sont connectés à des moyens 68 de sélection du maximum entre le minimum des rayons de courbure sélectionné par les moyens 212 et une valeur prédéterminée mémorisée dans des moyens de stockage 214, comme cela a été décrit précédemment.

Le dispositif 110 comprend également des moyens 72 de détermination d'une vitesse limite $V_L$ raccordée aux moyens 68, d'une manière identique à celle décrite en relation avec les figures 2 et 3.

Le dispositif 210 comprend également des moyens 216 qui reçoivent les signaux Ta, Tb, Tc de sélection des moyens 98 réalisant la fonction ET des dispositifs 200a, 200b, 200c associés aux paires de roues sélectionnées. Les moyens 216 sont propres à inverser chacun des signaux Ta, Tb, Tc reçus et à réaliser la fonction ET des signaux inversés.

Les moyens 216 délivrent leur résultat à des moyens 218 de sélection. Ces moyens 218 reçoivent la sortie des moyens 72 et une valeur des moyens 214 de stockage et sont propres à sélectionner l'une ou l'autre des valeurs reçues en fonction de la valeur délivrée par les moyens 216, c'est-à-dire la sortie des moyens 72 si la valeur délivrée par les moyens 216 vaut 0 et la valeur des moyens 214 de stockage sinon, et à délivrer leur sortie aux moyens 84 de régulation de l'unité 80, comme cela a été décrit précédemment.

Ainsi la limitation de la vitesse du train est réalisée en fonction du minimum des rayons de courbure calculés au niveau des paires de roues sélectionnées et la détection du glissement d'au moins une paire de roues a pour effet que cette paire de roues n'est pas prise en compte pour la limitation de la vitesse du train. Si toutes les paires de roues présentent un glissement, la limitation est alors désactivée.

Le fonctionnement du système venant d'être décrit est analogue à celui décrit en relation avec la figure 4 à la différence qu'il comprend une étape intermédiaire de sélection du minimum des rayons de courbure sélectionnés par les moyens 99 de sélection des dispositifs 200a, 200b, 200c de détermination du rayon de courbure, déclenchée à la suite de l'étape 104, le rayon de courbure minimum sélectionné étant utilisé pour la détermination de la vitesse limite $V_L$ dans l'étape 112 comme cela a été précédemment décrit en relation avec la figure 4.

L'étape 116 du fonctionnement du système venant d'être décrit est également modifiée et consiste à délivrer la consigne de couple sélectionnée en 114 aux moyens de commande des moteurs du train.

La sélection des paires de roues mécaniquement indépendantes les plus extrêmes permet un contrôle efficace de la vitesse du train lorsque ce dernier est engagé dans une courbe. En effet, comme cela est illustré dans la figure 1, le premier boggie 14a est engagé dans une portion droite de la voie ferrée 12 alors que le dernier boggie 14c est engagé dans une portion courbe de la voie ferrée 12. Ainsi, le train a sa vitesse limitée tant que l'ensemble du train n'est pas sensiblement en ligne droite, évitant ainsi des risques de déraillement.

Comme il est possible de le constater, le dispositif et le système conforme à l'invention venant d'être décrits sont applicables à tout type de véhicules ferroviaires comprenant au moins une paire de roues mécaniquement indépendantes et agencées en vis-à-vis du véhicule.

## Revendications

**1.** Système de contrôle de la vitesse d'un véhicule ferroviaire (10) équipé d'une pluralité de paires (16g, 16d ; 18g,18d ; 20g, 20d ; 22g, 22d, 24g, 24d ; 26g , 26d) de roues mécaniquement indépendantes agencées en vis-à-vis de part et d'autre de celui-ci, **caractérisé en ce qu'**il comprend :

> - une pluralité de dispositifs de contrôle de la vitesse de véhicule associés respectivement à des paires sélectionnées de la pluralité de paires de roues ; chaque dispositif de contrôle comprenant :
> - des moyens (42g, 42d, 44g, 44d, 46g, 46d, 48g, 48d, 50g, 50d, 52g, 52d) d'acquisition de la vitesse de rotation de chaque roue de la paire de roues ;
> - des moyens (60) de détermination du rayon de courbure de la voie ferrée au niveau de la paire de roues en fonction de la différence et de la somme des vitesses de rotation acquises de celles-ci ;
> - des moyens (72) de détermination d'une vitesse limite pour le véhicule en fonction du rayon de courbure déterminé ; et
> - des moyens (80) de limitation de la vitesse du véhicule propres à déterminer un signal de commande pour que ladite vitesse n'excède pas la vitesse limite déterminée,

et **en ce qu'**il comprend :

> - des moyens (86) de sélection, parmi les signaux de commande déterminés par lesdits dispositifs, du signal correspondant à la vitesse limite minimale.

**2.** Système selon la revendication 1, **caractérisé en ce que** les moyens de détermination du rayon de courbure comprennent :

- des moyens (62, 64) de détermination de la vitesse longitudinale de chaque roue de la paire de roues en fonction de la vitesse de rotation acquise de cette roue ; et
- des moyens (66) de calcul du rayon de courbure de la voie ferrée en fonction desdites vitesses longitudinales.

**3.** Système selon la revendication 2, **caractérisé en ce que** les moyens (66) de calcul du rayon de courbure sont propres à déterminer celui-ci selon la relation :

$$R = \left| \frac{E}{2} \times \frac{Vg + Vd}{Vg - Vd} \right|$$

où R est le rayon de courbure, E est l'écartement entre les roues de la paire de roues, et Vg et Vd sont les vitesses longitudinales des roues de la paire de roues.

**4.** Système selon la revendication 1, 2 ou 3, **caractérisé en ce que** les moyens de détermination de la vitesse limite sont propres à déterminer une vitesse limitée associée à la paire de roues selon la relation :

$$V_L = \alpha \times \sqrt{\beta \times R}$$

où $V_L$ est la vitesse limite, R le rayon de courbure de la voie ferrée au niveau de la paire de roues, et $\alpha$ et $\beta$ sont des paramètres prédéterminés.

**5.** Système selon l'une quelconque des revendications précédentes, **caractérisé en ce** le véhicule comprend un système de motorisation à commande par couple pour l'entraînement des roues du véhicule, et en ce que les moyens (80) de limitation comprennent des moyens (84) de régulation adaptés pour déterminer une consigne de couple pour le système de motorisation en fonction de la vitesse du véhicule et de la vitesse limite déterminée à partir d'une loi de régulation prédéterminée.

**6.** Système selon la revendication 5, **caractérisé en ce qu'**il comprend en outre des moyens (86) de sélection, pour la commande du système de motorisation, du minimum parmi la consigne de couple déterminée par les moyens (84) de régulation et une consigne de couple délivrée par le conducteur du véhicule.

**7.** Système selon l'une quelconque des revendications précédentes, **caractérisé en ce qu'**il comprend en outre des moyens (74) d'activation/désactivation de la limitation de vitesse mise en oeuvre par les moyens de limitation en fonction de conditions prédéterminées relatives au glissement des roues de la paire de roues.

**8.** Système selon la revendication 7, **caractérisé en ce que** les moyens d'activation/désactivation comprennent des moyens (88) de détermination d'une valeur représentative dudit glissement et des moyens (90) de comparaison de celle-ci à une valeur seuil prédéterminée, et **en ce que** la limitation de vitesse est désactivée si la valeur représentative dudit glissement est supérieure à la valeur seuil.

**9.** Système selon la revendication 8, **caractérisé en ce que** les moyens d'activation/désactivation activent la limitation de vitesse si au moins la valeur représentative dudit glissement est inférieure à la valeur seuil pendant une durée prédéterminée.

**10.** Système selon l'une quelconque des revendications 1 à 9. **caractérisé en ce qu'**il comprend :

- des moyens (212) de sélection du minimum des rayons de courbure déterminés par lesdits dispositifs,

et **en ce que** les moyens (72) de détermination de la vitesse limite d'au moins un dispositif sont propres à déterminer cette vitesse limite en fonction du minimum des rayons de courbure sélectionné.

**11.** Système selon l'une quelconque des revendications 1 à 10, **caractérisé en ce que** les paires sélectionnées comprennent les paires de la pluralité de paires de roues les plus extrêmes du véhicule.

**12.** Procédé de contrôle de la vitesse d'un véhicule ferroviaire équipé d'une pluralité de paires (16g, 16d ; 18g,18d ; 20g, 20d ;22g, 22d, 24g, 24d ; 26g ,26d) de roues mécaniquement indépendantes agencées en vis-à-vis de part et d'autre de celui-ci, **caractérisé en ce qu'**il comprend les étapes :

- d'acquisition (en 102) des vitesses de rotations de chaque roue d'au moins deux paires de roues agencées en vis-à-vis sélectionnées de la pluralité de paires de roues ;
- de détermination (en 104) du rayon de courbure de la voie ferrée au niveau de chaque paire sélectionnée de roues en fonction des vitesses de rotations acquises de cette-ci ;
- de détermination (en 106) d'une vitesse limite pour le véhicule en fonction de chaque rayon de courbure déterminé ;

- de détermination (112) d'une consigne de couple pour le véhicule en fonction de chaque vitesse limite, et
- de sélection (116) du minimum des consignes de couple déterminé par l'ensemble des paires de roues sélectionnées.

**Claims**

1. A system for controlling the speed of a railway vehicle (10) equipped with a plurality of pairs (16g, 16d; 18g, 18d; 20g, 20d; 22g, 22d, 24g, 24d; 26g, 26d) of mechanically independent wheels arranged facing one another to either side of the latter, **characterised in that** it comprises:

   - a plurality of devices for controlling the speed of the vehicle respectively associated with selected pairs of the plurality of pairs of wheels; each control device comprising:
   - means (42g, 42d, 44g, 44d, 46g, 46d, 48g, 48d, 50g, 50d, 52g, 52d) for acquiring the rotation speed of each wheel of the pair of wheels;
   - means (60) for determining the radius of curvature of the railway track on the pair of wheels based upon the difference and the sum of the rotation speeds acquired from the latter;
   - means (72) for determining a limit speed for the vehicle based upon the radius of curvature determined; and
   - means (80) for limiting the speed of the vehicle appropriate for determining a control signal so that said speed does not exceed the limit speed determined,

   and **in that** it comprises:

   - means (86) for selecting, from the control signals determined by said devices, the signal corresponding to the minimum limit speed.

2. The system according to Claim 1, **characterised in that** the means for determining the radius of curvature comprise:

   - means (62, 64) for determining the longitudinal speed of each wheel of the pair of wheels based upon the acquired speed of rotation of this wheel; and
   - means (66) for calculating the radius of curvature of the railway track based upon said longitudinal speeds.

3. The system according to Claim 2, **characterised in that** the means (66) for calculating the radius of curvature are appropriate for determining the latter according to the relation:

$$R = \left| \frac{E}{2} \times \frac{Vg + Vd}{Vg - Vd} \right|$$

where R is the radius of curvature, E is the distance between the wheels of the pair of wheels, and Vg and Vd are the longitudinal speeds of the wheels of the pair of wheels.

4. The system according to Claim 1, 2 or 3, **characterised in that** the means for determining the limit speed are appropriate for determining a limited speed associated with the pair of wheels according to the relation:

$$V_L = \alpha \times \sqrt{\beta \times R}$$

where $V_L$ is the limit speed, R the radius of curvature of the railway track on the pair of wheels, and $\alpha$ and $\beta$ are predetermined parameters.

5. The system according to any of the preceding claims, **characterised in that** the vehicle comprises a motorisation system with torque control for driving the wheels of the vehicle and **in that** the limitation means (80) comprise regulation means (84) adapted to determine a torque setting for the motorisation system based upon the speed of the vehicle and the limit sped determined according to a law of predetermined regulation.

6. The system according to claim 5, **characterised in that** it further comprises means (86) for selecting, for control of the motorisation system, the minimum from the torque setting determined by the regulation means (84) and a torque setting supplied by the vehicle driver.

7. The system according to any of the preceding claims, **characterised in that** it further comprises means (74) for activating/deactivating the speed limitation implemented by the limitation means based upon predetermined conditions relating to the slipping of the wheels of the pair of wheels.

8. The system according to Claim 7, **characterised in that** the activation/deactivation means comprise means (88) for determining a value representative of said slipping and means (90) for comparing the latter to a predetermined threshold value, and **in that** the speed limitation is deactivated if the representative value of said slipping is greater than the threshold value.

9. The system according to Claim 8, **characterised in that** the activation/deactivation means activate the speed limitation if at least the representative value of said slipping is less than the threshold value over a predetermined period.

10. The system according to any of Claims 1 to 9, **characterised in that** it comprises:

    - means (212) for selecting the minimum of the curvature radii determined by said devices,

    and **in that** the means (72) for determining the limit speed of at least one device are appropriate for determining this limit speed based upon the minimum of the radii of curvature selected.

11. The system according to any of Claims 1 to 10, **characterised in that** the pairs selected comprise the most extreme pairs of the plurality of pairs of wheels of the vehicle.

12. A method of controlling the speed of a railway vehicle equipped with a plurality of pairs (16g, 16d; 18g, 18d; 20g, 20d; 22g, 22d, 24g, 24d; 26g, 26d) of mechanically independent wheels arranged facing one another to either side of the latter, **characterised in that** it comprises the steps:

    - of acquiring (in 102) the rotation speeds of each wheel of at least two pairs of wheels arranged facing one another selected from the plurality of pairs of wheels;
    - of determining (in 104) the radius of curvature of the railway track on each selected pair of wheels based upon the acquired rotation speeds of the latter;
    - of determining (in 106) a limit speed for the vehicle based upon each radius of curvature determined;
    - of determining (112) a torque setting for the vehicle based upon each limit speed, and
    - of selecting (116) the minimum of the torque settings determined by all of the pairs of wheels selected.

**Patentansprüche**

1. System zur Steuerung der Geschwindigkeit eines Schienenfahrzeugs (10), das mit einer Anzahl von Paaren (16g,16d;18g,18d; 20g,20d;22g,22d;24g, 24d;26g,26d) von Rädern ausgestattet ist, die mechanisch unabhängig voneinander gegenüberliegend angeordnet sind, **gekennzeichnet durch**:

    - eine Anzahl von Einrichtungen zur Steuerung der Geschwindigkeit des Fahrzeugs, welche an ausgewählten Paaren aus der Anzahl von Radpaaren angeordnet sind; wobei jede Steuereinrichtung umfaßt:

    - Mittel (42g,42d,44g,44d,46g,46d,48g,48d, 50g,50d,52g,52d) zur Messung der Rotationsgeschwindigkeit jedes Rads des Radpaares;
    - Mittel (60) zur Ermittlung des Biegeradius des Schienenwegs auf Höhe des Radpaares aus der Differenz und der Summe der ermittelten Rotationsgeschwindigkeiten;
    - Mittel (72) zur Bestimmung einer Grenzgeschwindigkeit des Fahrzeugs als Funktion des bestimmten Biegeradius; und
    - Mittel (80) zur Geschwindigkeitsbegrenzung des Fahrzeugs, welche dazu geeignet sind, ein Steuersignal vorzusehen, damit die Geschwindigkeit nicht die bestimmte Grenzgeschwindigkeit überschreitet,

welches System ferner umfaßt:

    Mittel (86) zur Auswahl aus den Steuersignalen, welche **durch** diese Einrichtungen bestimmt worden sind, eines Signals entsprechend einer minimalen Grenzgeschwindigkeit.

2. System gemäß Anspruch 1, daduch **gekennzeichnet**, dass die Mittel zur Bestimmung des Biegeradius umfassen:

    - Mittel (62,64) zur Bestimmung der Längsgeschwindigkeit jedes Rads des Radpaares aus der Rotationsgeschwindigkeit, die für dieses Rad ermittelt worden ist; und
    - Mittel (66) zur Errechnung des Biegeradius des Schienenwegs aus diesen Längsgeschwindigkeiten.

3. System gemäß Anspruch 2, **dadurch gekennzeichnet, dass** die Mittel (66) zur Errechnung des Biegeradius dazu vorgesehen sind, letzteren gemäß der folgenden Beziehung zu bestimmen:

$$R = \left| \frac{E}{2} \times \frac{Vg + Vd}{Vg - Vd} \right|$$

wobei R der Biegeradius ist, E der Abstand zwischen den Rädern des Radpaares ist, und Vg und Vd die Längsgeschwindigkeiten der Räder des Radpaares sind.

4. System gemäß Anspruch 1, 2 oder 3, **dadurch gekennzeichnet, dass** die Mittel zur Bestimmung der Grenzgeschwindigkeit dazu vorgesehen sind, eine Grenzgeschwindigkeit eines Radpaares gemäß der folgenden Beziehung zu bestimmen:

$$V_L = \alpha \times \sqrt{\beta \times R}$$

wobei VL die Grenzgeschwindigkeit ist, R der Krümmungsradius des Schienenwegs auf Höhe des Radpaares ist, und $\alpha$ und $\beta$ vorbestimmte Parameter sind.

5. System gemäß einem der vorhergehende Ansprüche, **dadurch gekennzeichnet, dass** das Fahrzeug ein Antriebssystem zur Steuerung der Kraft zum Antrieb der Räder des Fahrzeugs umfaßt, und dass die Mittel (80) zur Begrenzung Mittel (84) zur Regelung umfassen, welche dazu vorgesehen sind, eine Kraftgröße für das Antriebssystem aus der Geschwindigkeit des Fahrzeugs und der Grenzgeschwindigkeit zu bestimmen, welche gemäß einem vorbestimmten Gesetz ermittelt wird.

6. System gemäß Anspruch 5, **gekennzeichnet** ferner durch Mittel (86) zur Auswahl zur Steuerung des Antriebssystems eines Minimums der Kraftgröße, das bestimmt wird durch die Mittel (84) zur Regelung und eine Kraftgröße, die vom Führer des Fahrzeugs vorgegeben wird.

7. System gemäß einem der vorhergehenden Ansprüche, **gekennzeichnet** ferner durch Mittel (74) zur Aktivierung/Deaktivierung der Geschwindigkeitsbegrenzung durch Mittel zur Begrenzung gemäß vorbestimmten Bedingungen in Abhängigkeit vom Schlupf von Rädern des Radpaares.

8. System gemäß Anspruch 7, **dadurch gekennzeichnet, dass** die Mittel zur Aktivierung/Deaktivierung Mittel (88) zur Bestimmung eines Werts für den Schlupf umfassen, sowie Mittel (90) zum Vergleich dieses Werts mit einem vorbestimmten Schwellwert, sowie **dadurch**, dass die Geschwindigkeitsbegrenzung deaktiviert wird, falls der Wert für den Schlupf größer ist als der Schnellwert.

9. System gemäß Anspruch 8, **dadurch gekennzeichnet, dass** die Mittel zur Aktivierung/Deaktivierung die Geschwindigkeitsbegrenzung aktivieren, falls zumindest der Wert für den Schlupf kleiner ist als der Schwellwert während eines vorbestimmten Zeitraums.

10. System gemäß einem der Ansprüche 1 bis 9, **gekennzeichnet durch**

   - Mittel (212) zur Auswahl eines Minimums der Biegeradien, die **durch** die Einrichtungen bestimmt worden sind,

   wobei die Mittel (72) zur Bestimmung der Geschwindigkeit, die **durch** die zumindest eine Einrichtung begrenzt wird, dazu vorgesehen sind, diese Grenzgeschwindigkeit als Funktion des Minimums der ausgewählten Biegeradien zu bestimmen.

11. System gemäß einem der Ansprüche 1 bis 10, **dadurch gekennzeichnet, dass** die ausgewählten Paare solche Paare aus der Anzahl von Radpaaren umfassen, die an den Enden des Fahrzeugs angeordnet sind.

12. Verfahren zur Steuerung der Geschwindigkeit eines Schienenfahrzeugs, das mit einer Zahl von Paaren (16g,16d;18g,18d; 20g,20d;22g,22d;24g,24d;26g, 26d) von Rädern ausgestattet ist, die mechanisch unabhängig voneinander einander gegenüberliegend angeordnet sind, **gekennzeichnet durch** die folgenden Schritte:

   - Ermittlung (102) der Rotationsgeschwindigkeiten jedes Rads für zumindest zwei Radpaare, die einander gegenüberliegend angeordnet sind, von der Anzahl von Radpaaren;
   - Bestimmung (104) des Biegeradius des Schienenwegs auf Höhe des ausgewählten Radpaares als Funktion der davon ermittelten Rotationsgeschwindigkeiten;
   - Bestimmung (106) einer Grenzgeschwindigkeit für das Fahrzeug als Funktion des bestimmten Biegeradius;
   - Bestimmung (112) einer Kraftgröße für das Fahrzeug als Funktion dieser Grenzgeschwindigkeit, und
   - Auswahl (116) des Minimums der bestimmten Größen für die Anordnung der ausgewählten Radpaare.

*FIG.1*

**FIG.2**

FIG.3

EP 1 659 018 B1

**_FIG.4_**

FIG.5

EP 1 659 018 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2371127 A
- WO 9914093 A
- US 2004030483 A1
- US 6456923 B1